# EUROPEAN PATENT APPLICATION

(11) **EP 4 610 909 A1**
(43) Date of publication of application: **03.09.2025**
(21) Application number: 24305316.2
(22) Date of filing: 29.02.2024
(51) Int. Cl.: G06Q 10/10, G06Q 30/0251

(54) **METHOD FOR MANAGING CUSTOMER COMMUNICATIONS**

(71) Applicant: BULL SAS, 78340 Les Clayes-Sous-Bois (FR)
(72) Inventor: KOTHARI, MITESH VIKRAM, 400080 Mumbai (IN)
(74) Representative: Cabinet Camus Lebkiri

(57) **Abstract**

The invention relates to a method (100) for managing customer communications, the method being implemented by a customer communication system, the method comprising the steps of, for each customer communication:
- Generating (110) a composition processing schema comprising attributes of a design process of a customer communication, the attributes comprising a composition identifier and a composition type, the composition type being chosen amongst a batch type, a real type and an interactive type.
- Generating (120) a communication delivery schema comprising attributes of a delivery process of the customer communication, the attributes comprising a communication identifier and a delivery channel, and
- Generating (130) a customer schema comprising the composition identifier, the communication identifier and the attributes of a customer for whom the customer communication is destined, the attributes comprising a customer identifier.

## Description

### TECHNICAL FIELD

The technical field of the invention is the one of customer communication management.

The invention regards a method and a system for managing customer communications.

### STATE OF THE ART

A lot of organizations, for example in the telecom, utilities, financial service, and insurance industries, are in verge of transforming their existing communication modes. Especially after the COVID-19 crisis, there is an interest to digitalize these communications. These organisations need the right information at the right time to provide personalised communication via the right medium.

These organizations are communicating with their customers in various formats. For example, three different formats may be used:
- batch processing, which consists of creating, generating, and delivering, in bulk, different types of customer communications such as daily, monthly, and/or quarterly reminders,
- on-demand processing, which consists of creating, generating, and delivering, upon receiving a request from a customer for example, different types of customer communications such as bank statements for a specific date range, and
- interactive communications, which consists of creating, generating, and delivering, for specific events for example, different types of customer communications such as a marketing campaigns.

In all three modes of communications, thousands of pre-defined templates are used to generate millions of contents or communications.

These communications may be created, generated and delivered and stored with a customer communication management (CCM) platform for example. A CCM platform allows an organization to generate and deliver many different types of customer communications via all possible electronic and traditional mediums. A customer communication is a document comprising personalized information. These personalized information, also called dynamic information, are generated by dynamic data. A dynamic data is a data which continually changes after it has been stored in order to maintain its integrity. These dynamic data may be stored in a CRM database, which stands for customer relationship management database. A CRM database is a resource containing all customer information collected, governed, transformed, and shared across an organization.

With the current solutions, each organization is using a lot of different and heterogeneous systems responsible for the generation, updating and storage of the static and dynamic data used to create and deliver the customer communications. Each system is storing its specific data in a specific format in a specific database. To generate and deliver a new customer communication, a first problem is to retrieve the right data within one or more of the different systems. Then, a second problem is to fetch the specific data and to transform the data from the specific format to a different required format. Finally, a third problem is to identify the attributes of the customer communication which optimizes the probability the content of the customer communication is read and understood by a customer or a prospect. Indeed, with the current solutions, various customer communications with various attributes are generated and deliver to a customer or a prospect in order to hope that at least one is read and understood. Therefore, there is a waste of resources to create and deliver these customer communications.

Within this context, there is still a need to improve the management of customer communications within an organization.

### SUMMARY OF THE INVENTION

There is therefore a need to provide a method for managing customer communications which mutualizes data. The method according to the invention creates three linked schemas which is a standardized data structure to store information related to the entire lifecycle of customer communications, from their creation to their delivery. These schemas optimize the management of customer communications for various reasons. First, based on these schemas, interoperability between various and heterogeneous systems is ensured. For example, the retrieving of the information of a customer or of a communication is optimized as there is a shared information between the various systems responsible for the generation, updating and storage of the static and dynamic data used to create and deliver the customer communications. Second, these schemas allow saving network bandwidth resources by creating a common knowledge base. For example, it is easier to identify the attributes of the customer communication which optimize the probability that the content of the customer communication is read and understood by a customer or a prospect. Third, these schemas simplify the generation of new customer communications based on dynamic and static data which may be stored in different formats.

According to a first aspect of the invention, this need is satisfied by providing a method for managing customer communications, the method being implemented by a customer communication system, the method comprising the steps of, for each customer communication:
- Generating a composition processing schema comprising attributes of a design process of a customer communication, the attributes comprising a composition identifier and a composition type, the composition type being chosen amongst a batch type, a real type and an interactive type.
- Generating a communication delivery schema comprising attributes of a delivery process of the customer communication, the attributes comprising a communication identifier and a delivery channel, and
- Generating a customer schema comprising the composition identifier, the communication identifier and the attributes of a customer for whom the customer communication is destined, the attributes comprising a customer identifier.

The method according to the first aspect of the invention may also have one or more of the following characteristics, considered individually or according to any technically possible combinations thereof:
- the generating the composition processing schema, the generating the communication delivery schema and the generating the customer schema are triggered by an event-driven architecture, each event of the event-driven architecture corresponding to a state of a lifecycle of a customer communication management, and for each event of the event-driven architecture, a state attribute corresponding to the event is added to the composition processing schema and/or communication delivery schema and/or the customer schema.
- the customer communication system comprises:
   - a customer communication management module 210 configured to design customer communications,
   - an application programming interface configured to enable communication between a communication composition module and the customer communication management module,
   - the communication composition module configured to generate the composition processing schema upon detecting a design event and/or a build event via the application programming interface, the design event corresponding to an end of a design phase of a customer communication template, the build event corresponding to an end of a check in and a build of the customer communication based on the customer communication template,
- the composition processing schema is generated by the communication composition module upon detecting the design event and/or the build event produced by the customer communication management module, and
- the generating the composition processing schema further comprising:
   - initializing the composition identifier with a unique identifier, and
   - initializing the composition type with the batch type, the real type and the interactive type.
- the customer communication management module is further configured to package and register customer communications,
- the communication composition module is further configured to generate the communication delivery schema upon detecting a deploy event and/or a compose event via the application programming interface, the deploy event corresponding to an end of a packaging of the customer communication and the compose event corresponding to an end of a registering of the customer communication,
- the communication delivery schema is generated upon detecting, by the communication composition module, the deploy event and/or the compose event produced by the customer communication management module, and
- the generating the communication delivery schema further comprising:
   - initializing the communication identifier with a unique identifier, and
   - initializing the delivery channel,
- the customer communication system further comprises a customer relationship management module configured to store information about customers,
- the application programming interface is further configured to enable communication between the communication composition module and the customer relationship module,
- the communication composition module is further configured to generate the customer schema upon detecting a request event via the application programming interface, the request event corresponding to a request, based on a timestamp or a user input, to start a delivery phase of the customer communication,
- the customer schema is generated upon detecting, by the communication composition module, the request event produced by the customer relationship management module, and
- the generating the customer schema further comprising:
   - initializing the customer identifier with a unique identifier,
   - retrieving the composition identifier of the composition processing schema generated and
   - retrieving the communication identifier of the communication delivery schema generated,
- the customer communication system further comprises a policy administration system configured to manage and administer the lifecycle of insurance policies,
- the application programming interface is further configured to enable communication between the communication composition module and the customer relationship module,
- the communication composition module is further configured to generate the customer schema upon detecting a request event via the application programming interface, the request event corresponding to a request, based on a timestamp or a user input to start a delivery phase of the customer communications,
- the customer schema is generated upon detecting, by communication composition module, the request event produced by the policy administration system, and
- the generating the customer schema further comprising:
   - initializing the customer identifier with a unique identifier,
   - retrieving the composition identifier of the composition processing schema generated, and
   - retrieving the communication identifier of the communication delivery schema generated,
- the communication composition module is further configured to generate the customer schema upon detecting a delivery event via the application programming interface, the delivery event corresponding to a delivering the customer communication to the customer,
- the customer schema is generated upon detecting, by the communication composition module, the delivery event produced by customer communication management module, and
- the generating the customer schema further comprising:
   - initializing the customer identifier with a unique identifier,
   - retrieving the composition identifier of the composition processing schema generated, and
   - retrieving the communication identifier of the communication delivery schema generated,
- the customer communication system further comprises a delivery module configured to deliver customer communications,
- the application programming interface is further configured to enable communication between the communication composition module and the delivery module,
- the communication composition module is further configured to generate the customer schema upon detecting a receipt event and/or an acknowledge event via the application programming interface, the receipt event corresponding to a reception of the delivered customer communication, the acknowledge event corresponding to an acknowledgement of the delivered customer communication,
- the customer schema is generated upon detecting, by the communication composition module, the receipt event and/or the acknowledge event produced by the delivery module, and
- the generating the customer schema further comprises:
   - initializing the customer identifier with a unique identifier,
   - retrieving the composition identifier of the composition processing schema generated, and
   - retrieving the communication identifier of the communication delivery schema generated,
- the customer schema further comprises:
   - adding a receipt data indicating the customer communication has been received upon detecting the receipt event, and
   - adding a acknowledge data indicating the customer communication has been acknowledged upon detecting the acknowledge event.
- the method according to the invention further comprises a step of:
   - adding one or more additional composition identifiers to the customer schema generated, the one or more additional composition identifiers corresponding to an additional customer communication, and/or
   - adding one or more additional communication identifiers to the customer schema generated, the one or more additional communication identifiers corresponding to an additional delivery process of the customer communication and/or the additional customer communication,
- the method according to the invention further comprises steps of:
   - identifying a set of customer schemas having a predetermined customer identifier, the predetermined customer identifier corresponding to a customer,
   - retrieving a set of communication identifiers based on the set of customer schemas,
   - retrieving a set of communication delivery schemas based on the set of predetermined communication identifiers, and
   - analysing a behaviour of the customer by using K-Means unsupervised learning method for clustering data points, each data point corresponding to a communication delivery schema, the clustering being based on the state attribute of the communication delivery schemas.

A second aspect of the invention relates to a customer communication system for managing to customer communications, the system comprising:
- a customer communication management module configured to:
   - design customer communications,
   - package and register customer communications, and
   - produce at least one event to a communication composition module via the application programming interface configured to enable communication between the customer communication management module and the communication composition module,
- a customer relationship management module configured to:
   - store information about customers, and
   - produce at least one event to the communication composition module via the application programming interface configured to enable communication between the customer relationship management module and the communication composition module,
- a delivery module configured to:
   - deliver customer communications, and
   - produce at least one event to the communication composition module via the application programming interface configured to enable communication between the delivery module and the communication composition module, and
- a communication composition module configured to:
   - receive events, via the application programming interface, produced by the customer communication management module (210), the customer relationship management module and communication composition module,
   - generate, based on at least one the received events, a composition processing schema comprising attributes of a design process of a customer communication, the attributes comprising a composition identifier and a composition type, the composition type being chosen amongst a batch type, a real type and an interactive type,
   - generate, based on at least one the received events, a communication delivery schema comprising attributes of a delivery process of the customer communication, the attributes comprising a communication identifier and a delivery channel, and
   - generate, based on at least one the received events, a customer schema comprising the composition identifier, the communication identifier, and the attributes of a customer for whom the customer communication is intended, the attributes comprising a customer identifier.

The system according to the second aspect of the invention may also have one or more of the following characteristics, considered individually or according to any technically possible combinations thereof:
- The system according to the invention further comprising a policy administration system configured to:
   - manage and administer the lifecycle of insurance policies,
   - produce at least one event to a communication composition module via the application programming interface configured to enable communication between the policy administration system and the communication composition module, and
- wherein the communication composition module is further configured to receive events, via the application programming interface, produced by policy administration system.

A third aspect of the invention relates to a computer program comprising instructions for performing the method according to the invention.

A fourth aspect of the invention relates to a computer readable storage medium having recorded thereon the computer program according to the invention.

### BRIEF DESCRIPTION OF THE FIGURES

Other characteristics and advantages of the invention will become clear from the description that is given thereof below, by way of indication and in no way limiting, with reference to the appended figures, among which:
Figure 1 shows a flowchart of an example of a method according to the invention.
Figure 2 shows an illustration of a system compatible with the method according to the invention.

### DETAILED DESCRIPTION

For greater clarity, identical or similar elements are marked by identical reference signs in all of the figures.

Some embodiments of devices and methods in accordance with embodiments of the invention are now described, by way of example only, and with reference to the accompanying drawings. The description is to be regarded as illustrative in nature and not as restrictive.

It is provided a method for managing customer communications. Managing customer communications is the process of designing, generating and delivering communications to an external person such as a customer of interest or a prospect of interest. Managing customer communications may also refer to collect, analyse and exploit information relative to the process of designing, generating and delivering customer communications. The method according to the invention improves the managing of customer communications as it helps saving computing resources, for example by allowing fast identification of what kind of communications has been sent to the external person, but also to analyse which kind of communications are acknowledged by the external person, which may be preferred in the future communications. Said otherwise, the process of managing customer communications is rationalized by using the method according to the invention and is therefore optimizing the use of computing, network bandwidth, and memory resources.

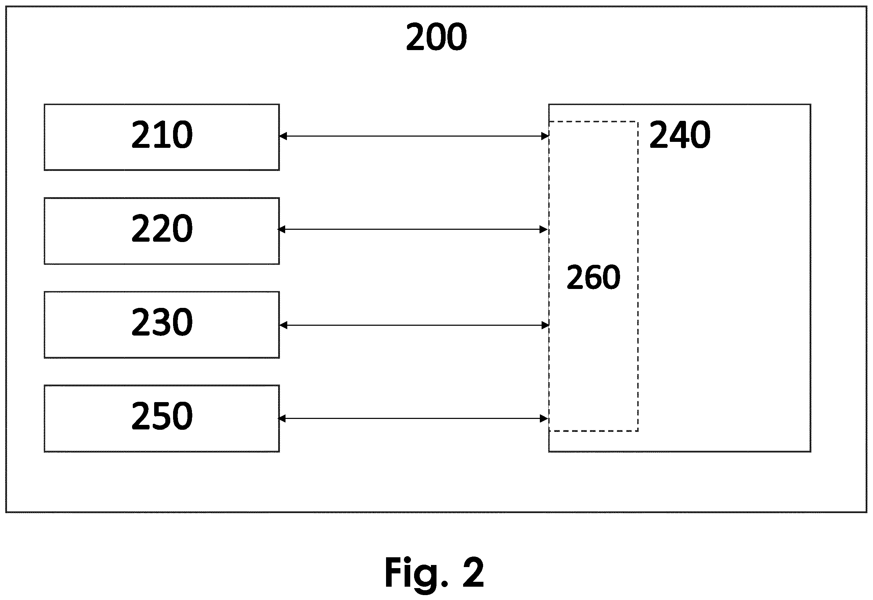

The method according to the invention is implemented by a customer communication system. Figure 2 shows an illustration of a customer communication system 200 compatible with the method according to the invention. It means that the steps, or at least some of the steps, are performed by at least one computer or processor or other similar system. Thus, steps are performed by the customer communication system 200, possibly fully automatically, or, semi-automatically. In examples, the triggering of at least some of the steps of these methods may be performed by user-computer interaction. The level of user-computer interaction required may depend on the level of automation intended and balanced against the need to implement the user's wishes. In examples, this level may be user defined and/or may be predefined.

A typical example of an implementation of the method is to execute the method with a customer communication system 200 adapted for the purpose. The customer communication system 200 may be configured to implement all the steps of the method and/or its various embodiments according to the invention. To this end, the system 200 comprises a memory and a computing unit, the memory being configured to store instructions which, when executed by the computing unit, cause the computing unit to implement the steps of the method according to the invention and/or the different embodiments of the method according to the invention. The system 200 further comprises at least one network interface for communicating with remote systems, i.e. for sending and receiving data to said systems, via at least one network. The systems may be servers or computers storing data. The data may be stored by the same server or by different servers/databases.

The customer communication system 200 may take as inputs raw data about the customers, business rules, and/or policies details in case of insurance communications. The customer communication system 200 may output various communications through various delivery channels.

The customer communication system 200 comprises various systems. A first system of the customer communication system 200 is the customer communication management module 210. The customer communication management module 210 is configured to design the customer communications, for example via a design customer communication management submodule. The customer communication management module 210 is also configured to package and register the customer communications, for example via a production customer communication management submodule. A second system of the customer communication system 200 is the customer relationship management module 220. The customer relationship management module 220 is configured to store information about an external person such as a customer of interest or a prospect of interest. A third system of the customer communication system 200 is the delivery module 230 configured to deliver customer communications. A fourth optional system of the customer communication system 200 is the policy administration system 250 configured to manage and administer the lifecycle of insurance policies. A fifth system of the customer communication system 200 is the communication composition module 240. The communication composition module 240 is configured to interact with the other systems 210, 220, 230 and optionally 250 of the customer communication system 200. The term "interaction" comprises exchanging data but also communicating based on events. The interactions between the communication composition module 240 and the other systems 210, 220, 230 and optionally 250 are performed via an application programming interface 260. The application programming interface is therefore configured to allow a communication between the communication composition module 240 and the other systems 210, 220, 230 and optionally 250 of the customer communication system 200. The application programming interface 260 may be stored in the communication composition module 240. The application programming interface 260 may be provided within a spring boot application.

The application programming interface 260 is configured to allow interactions based on events. Therefore, each system 210, 220, 230 and optionally 250 produce events detected by the communication composition module 240 via the application programming interface 260. The communication composition module 240 detects these events and may also produce events detected by the systems 210, 220, 230 and optionally 250. The communication composition module 240 may also comprise a repository configured to store the events in a dedicated database.

The communication composition module 240 is also configured to generate the three schemas used in the method according to the invention. Hence, the communication composition module 240 is configured to generate, based on at least one of the detected events, a composition processing schema. The composition processing schema comprises attributes of the design process of a customer communication. the attributes of the composition processing schema comprise a composition identifier and a composition type. The composition processing schema may also comprise attributes such as a simplex, a duplex, a Boolean indicating the presence or not of images in the corresponding customer communication, a Boolean indicating the presence or not of graphs in the corresponding customer communication, barcode details in the corresponding customer communication, charts in the corresponding customer communication, dynamic data in the corresponding customer communication, a Boolean indicating the presence or not of vertical text in the corresponding customer communication, a Boolean indicating the presence or not of static or dynamic PDF files, for "portable document format" files in the corresponding customer communication. The term "identifier" in the present demand is a data used to represent uniquely the corresponding schema. For example, the composition identifier is a data used to represent uniquely the composition processing schema. A composition type is chosen amongst a batch type, a real type and an interactive type. The batch type corresponds to batch processing. The real type corresponds to on-demand processing. The interactive type corresponds to interactive communications. The communication composition module 240 is also configured to generate, based on at least one the received events, a communication delivery schema. The communication delivery schema comprises attributes of the delivery process of the customer communication. The attributes of the communication delivery schema comprise a communication identifier and a delivery channel. As an example, the delivery channel may be chosen amongst email, fax, SMS, message in a social network, mail letters... The communication delivery schema may also comprise attributes about delivery success, delivery acknowledgement, delivered by channel identifier, delivery schedule, delivery date and time, recurring delivery XX. The communication composition module 240 is further configured to generate, based on at least one the received events, a customer schema. The customer schema comprises attributes of a delivery process of the customer communication. The attributes of the customer schema comprise the communication identifier and the attributes of a customer, for whom the customer communication is intended, i.e. is designed and produced for and, may or will be produced. The attributes of the customer also comprise a customer identifier. The customer schema may also comprise attributes about customer demo graphic details such as its age group, location, customer preferences, customer type, such as premium or normal, product purchase ID. The customer schema may also comprise an aggregate of one or more composition processing schemas and one or more communication delivery schemas.

The computer program may comprise instructions executable by a computer, the instructions comprising means for causing the above system to perform the methods. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the methods by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the methods.

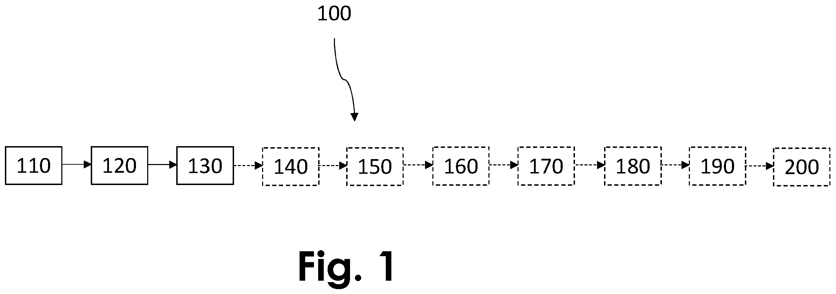

Figure 1 is a synoptic scheme illustrating the steps of an example of the method 100 according to the invention. The mandatory steps of the example of the method 100 are indicated by a rectangle with solid lines and the optional steps are indicated by a rectangle with dashed lines.

A first step 110 of the method 100 comprises a generation of the composition processing schema. A second step 120 of the method 100 comprises a generation of the communication delivery schema. A third step 130 of the method 100 comprises a generation of the customer schema.

In an example, compatible with the precedent examples, the generation 110, 120, 130 of the schemas are triggered by an event-driven architecture. Each event of the event-driven architecture may correspond to a state of a lifecycle of a management of a customer communication. An event-driven architecture is a software architecture paradigm concerning the production and detection of events. An event can be defined as a significant change in state. For each event, an attribute indicating the current state of the corresponding customer communication may be added as an attribute to at least one of the schemas.

The events used in the method 100 may comprise at least 8 events. The first event may be a design event corresponding to an end of a design phase of a customer communication template. The design event may be produced by the customer communication management module 210, especially by the design customer communication management submodule. The second event may be a build event corresponding to an end of a check in and a build of the customer communication based on the customer communication template. The build event may be produced by the customer communication management module 210, especially by the design customer communication management submodule. The third event may be a deploy event corresponding to an end of a packaging of the customer communication. The deploy event may be produced by the customer communication management module 210, especially by the production customer communication management submodule. The fourth event may be a request event corresponding to a request, based on a timestamp or a user input, to start a delivery phase of the customer communication. The request event may be produced by the customer relationship management module 220 and/or by the policy administration system 250. The fifth event may be a compose event corresponding to an end of a registering of the customer communication. The compose event may be produced by the customer communication management module 210, especially by the production customer communication management submodule. The sixth event may be a delivery event corresponding to a delivering the customer communication to the customer. The delivery event may be produced by produced by the customer communication management module 210. The seventh event may be a receipt event corresponding to a reception of the delivered customer communication. The receipt event may be produced by the delivery module. The eighth event may be an acknowledge event corresponding to an acknowledgement of the delivered customer communication. The acknowledge event may be produced by the delivery module.

In an example, compatible with the precedent examples, the generating 110 of the composition processing schema may be performed by the communication composition module 240 upon detecting the design event and/or the build event via the application programming interface 260. The generating 110 of the composition processing schema may further comprise:
- initializing the composition identifier with a unique identifier, and
- initializing the composition type with the batch type, the real type and the interactive type.

In an example, compatible with the precedent examples, a design data indicating the end of the design phase of the customer communication template may be added to the composition processing schema upon detecting the design event. In another example, compatible with the precedent examples, a build data indicating the end of the check in and the build of the customer communication based on the customer communication template may be added to the composition processing schema upon detecting the build event. The addition of the design data and/or build data may be performed during the generation of the composition processing schema or after the composition processing schema has been generated. For example, the design data may be added to a composition processing schema during its generation and the build data may be added few hours or days later to the composition processing schema at the end of the check in and the build of the customer communication.

In an example, compatible with the precedent examples, the generating 120 of the communication delivery schema may be performed by the communication composition module 240 upon detecting the deploy event and/or the compose event via the application programming interface 260.

The generating 120 of the communication delivery schema may further comprise:
- initializing the communication identifier with a unique identifier, and
- initializing the delivery channel.

The delivery channel may be initialized with a value chosen amongst:
- email,
- fax,
- SMS,
- message in a social network, and
- mail letters send to one or more addresses of the customer of interest.

In an example, compatible with the precedent examples, a deploy data indicating the end of a packaging of the customer communication may be added to the communication delivery schema upon detecting the deploy event. In another example, compatible with the precedent examples, a compose data indicating the end of the check in and the compose of the customer communication based on the customer communication template may be added to the communication delivery schema upon detecting the compose event. The addition of the deploy data and/or compose data may be performed during the generation of the communication delivery schema or after the communication delivery schema has been generated. For example, the deploy data may be added to a communication delivery schema during its generation and the compose data may be added to the communication delivery schema few hours or days later, for example at the end of the check in and the compose of the customer communication based on the customer communication template.

In an example, compatible with the precedent examples, the generating 130 of the customer schema may be performed by the communication composition module 240 upon detecting:
- the delivery event via the application programming interface 260, and/or
- the receipt event and/or the acknowledge event via the application programming interface 260.

The generating 130 of the customer schema may further comprise:
- the initializing the customer identifier with a unique identifier,
- retrieving the composition identifier of the composition processing schema generated 110, and
- retrieving the communication identifier of the communication delivery schema generated 120.

In an example, compatible with the precedent examples, the composition processing schema, the communication delivery schema and the customer schema may be merged. For example, the customer schema may be merged with:
- one or more composition processing schema sharing the same composition identifier,
- one or more communication delivery schema sharing the same communication identifier.

In an example, compatible with the precedent examples, the customer communication system 200 may also comprise a data transformation engine. The data transformation engine may be used to extract, transform, validate and load activities related to the managing of the customer communications. Hence, the data transformation engine may transform the existing data, and/or the live data in the transformed communication to be preserved in the customer communication system 200 and/or to be used by any analytics platform.

In an example, compatible with the precedent examples, a delivery data indicating the delivery the customer communication to the customer may be added to the customer schema upon detecting a delivery event. In a second example, compatible with the precedent examples, a receipt data indicating the reception of a customer communication may be added to the customer schema upon detecting a receipt event. In a third example, compatible with the precedent examples, an acknowledge data indicating the acknowledgement of a customer communication may be added to the customer schema upon detecting an acknowledge event. The addition of the delivery data and/or receipt data and/or acknowledge data may be performed during the generation of the customer schema or after a customer schema has been generated. For example, the delivery data and/or receipt data may be added to a customer schema during its generation and the acknowledge data may be added to the customer schema few hours or days later, for example when the customer communication is acknowledged.

In an example, compatible with the precedent examples, it is possible to modify the customer schema in order to have more than one composition identifiers and/or more than one communication identifiers and/or or more than one customer identifiers. For example, it is possible to have a customer schema with one customer identifier and a plurality of composition identifiers and a plurality of communication identifiers. This example of a customer schema may for example correspond to the various customer communications sent to a customer of interest. In another example, it is possible to have a customer schema with a plurality of customer identifiers and a plurality of communication identifiers and a plurality of composition identifiers, the composition identifiers corresponding to composition processing schemas having the same composition type. This example of a customer schema may for example correspond to one composition type of customer communications sent to various customers by various delivery modes. In a further example, it is possible to have a customer schema with a plurality of customer identifiers and a plurality of composition identifiers and a plurality of communication identifiers, the communication identifiers corresponding to communication delivery schemas having the same delivery channel. This example of a customer schema may for example correspond to one delivery channel used to deliver customer communications sent to various customers.

In an example, compatible with the precedent examples, the method 100 may comprise one or more optional steps to modify the customer schema. For example, the optional steps may comprise one or more steps of:
- adding 140 one or more additional composition identifiers to the customer schema generated 130, the one or more additional composition identifiers corresponding to an additional customer communication, and/or
- adding 150 one or more additional communication identifiers to the customer schema generated 130, the one or more additional communication identifiers corresponding to an additional delivery process of the customer communication and/or the additional customer communication.

In an example, compatible with the precedent examples, the method 100 may be used to analyse a behaviour of the customer or the prospect of interest. For example, the method 100 may comprise fifth optional steps. The first optional step 160 of this example comprises identifying a set of customer schemas having a predetermined customer identifier. The predetermined customer identifier corresponds for example to a customer or a prospect of interest. The second optional step 170 comprises retrieving a set of communication identifiers based on the set of customer schemas. The third optional step 180 comprises retrieving a set of communication delivery schemas based on the set of communication identifiers. The fourth optional step 190 comprises analysing a behaviour of the customer or the prospect of interest by using K-Means unsupervised learning method for clustering data points. Each data point may correspond to a communication delivery schema. The clustering may for example be based on the state attribute of the communication delivery schemas.

In an example, the K-Means unsupervised learning method may iteratively divide data points into K clusters by minimizing the variance in each cluster. This allows identifying that a specific product for a specific customer has reached to a specific state. In a first example scenario, a first customer is using a first product. The customer communication send to this first customer regarding the first product has reached a compose state but not the next state which is a deliver state. Hence, it is possible to identify that from a composition point of view there is an issue of delivery, for example the delivery channel may not be adapted for the first customer. In a second example scenario, a second customer is using the first product. The customer communication send to this second customer regarding the first product has reached a receipt state but not the next state which is an acknowledge state. Hence, it is possible to identify that the customer communication, for example delivered by email, is not pertinent. For example, the email may have been automatically treated as a spam. K-means unsupervised learning method may therefore be used to predict which state a customer communication may reach for a specific customer. Analysing a behaviour of the customer or the prospect of interest, by a K-means unsupervised learning method for example, may allow to switch from a quantitative approach to a qualitative approach in the management of the customer communications. Indeed, at the moment, especially with the digitalization of the customer communications, the quantitative approach is often used and millions of communications are sent. However, the quantitative approach is resourceful, especially in terms of memory and network bandwidth resources. Being able to switch to a qualitative approach will help saving such resources.

In an example, compatible with the precedent examples, the method 100 may comprise a final step of sending 200 a new customer communication comprising:
- determining at least a part of a design of the new customer communication based on one or more attributes of an existing composition processing schema, and/or
- determining at least a part of a delivery of the new customer communication based on one or more attributes of an existing communication delivery schema, and/or
- determining at least one customer information of the new customer communication based on one or more attributes of an existing customer schema.

## Claims

1. A method (100) for managing customer communications, the method being implemented by a customer communication system, the method comprising the steps of, for each customer communication:
- Generating (110) a composition processing schema comprising attributes of a design process of a customer communication, the attributes comprising a composition identifier and a composition type, the composition type being chosen amongst a batch type, a real type and an interactive type.
- Generating (120) a communication delivery schema comprising attributes of a delivery process of the customer communication, the attributes comprising a communication identifier and a delivery channel, and
- Generating (130) a customer schema comprising the composition identifier, the communication identifier and the attributes of a customer for whom the customer communication is destined, the attributes comprising a customer identifier.

2. A method (100) of claim 1 wherein:
- the generating (110) the composition processing schema, the generating (120) the communication delivery schema and the generating (130) the customer schema are triggered by an event-driven architecture, each event of the event-driven architecture corresponding to a state of a lifecycle of a customer communication management, and
- for each event of the event-driven architecture, a state attribute corresponding to the event is added to the composition processing schema and/or communication delivery schema and/or the customer schema.

3. A method (100) of claim 2 wherein:
- the customer communication system comprises:
o a customer communication management module 210 configured to design customer communications,
∘an application programming interface configured to enable communication between a communication composition module and the customer communication management module,
∘the communication composition module configured to generate (110) the composition processing schema upon detecting a design event and/or a build event via the application programming interface, the design event corresponding to an end of a design phase of a customer communication template, the build event corresponding to an end of a check in and a build of the customer communication based on the customer communication template,
- the composition processing schema is generated (110) by the communication composition module upon detecting the design event and/or the build event produced by the customer communication management module, and
- the generating (110) the composition processing schema further comprising:
∘initializing the composition identifier with a unique identifier, and
∘initializing the composition type with the batch type, the real type and the interactive type.

4. A method (100) of claim 2 or claim 3 wherein:
- the customer communication management module is further configured to package and register customer communications,
- the communication composition module is further configured to generate (120) the communication delivery schema upon detecting a deploy event and/or a compose event via the application programming interface, the deploy event corresponding to an end of a packaging of the customer communication and the compose event corresponding to an end of a registering of the customer communication,
- the communication delivery schema is generated (120) upon detecting, by the communication composition module, the deploy event and/or the compose event produced by the customer communication management module, and
- the generating (120) the communication delivery schema further comprising:
∘initializing the communication identifier with a unique identifier, and
∘initializing the delivery channel.

5. A method (100) of claim 2 to claim 4 wherein:
- the customer communication system further comprises a customer relationship management module configured to store information about customers,
- the application programming interface is further configured to enable communication between the communication composition module and the customer relationship module,
- the communication composition module is further configured to generate (130) the customer schema upon detecting a request event via the application programming interface, the request event corresponding to a request, based on a timestamp or a user input, to start a delivery phase of the customer communication,
- the customer schema is generated (130) upon detecting, by the communication composition module, the request event produced by the customer relationship management module, and
- the generating (130) the customer schema further comprising:
∘initializing the customer identifier with a unique identifier,
∘retrieving the composition identifier of the composition processing schema generated (110), and
∘retrieving the communication identifier of the communication delivery schema generated (120).

6. A method (100) of claim 2 to claim 5 wherein:
- the customer communication system further comprises a policy administration system configured to manage and administer the lifecycle of insurance policies,
- the application programming interface is further configured to enable communication between the communication composition module and the customer relationship module,
- the communication composition module is further configured to generate (130) the customer schema upon detecting a request event via the application programming interface, the request event corresponding to a request, based on a timestamp or a user input to start a delivery phase of the customer communications,
- the customer schema is generated (130) upon detecting, by communication composition module, the request event produced by the policy administration system, and
- the generating (130) the customer schema further comprising:
∘initializing the customer identifier with a unique identifier,
∘retrieving the composition identifier of the composition processing schema generated (110), and
∘retrieving the communication identifier of the communication delivery schema generated (120).

7. A method (100) of claim 2 to claim 6 wherein:
- the communication composition module is further configured to generate (130) the customer schema upon detecting a delivery event via the application programming interface, the delivery event corresponding to a delivering the customer communication to the customer,
- the customer schema is generated (130) upon detecting, by the communication composition module, the delivery event produced by customer communication management module, and
- the generating (130) the customer schema further comprising:
∘initializing the customer identifier with a unique identifier,
∘retrieving the composition identifier of the composition processing schema generated (110), and
∘retrieving the communication identifier of the communication delivery schema generated (120).

8. A method (100) of claim 2 to claim 8 wherein:
- the customer communication system further comprises a delivery module configured to deliver customer communications,
- the application programming interface is further configured to enable communication between the communication composition module and the delivery module,
- the communication composition module is further configured to generate (130) the customer schema upon detecting a receipt event and/or an acknowledge event via the application programming interface, the receipt event corresponding to a reception of the delivered customer communication, the acknowledge event corresponding to an acknowledgement of the delivered customer communication,
- the customer schema is generated (130) upon detecting, by the communication composition module, the receipt event and/or the acknowledge event produced by the delivery module, and
- the generating (130) the customer schema further comprising:
∘initializing the customer identifier with a unique identifier,
∘retrieving the composition identifier of the composition processing schema generated (110), and
∘retrieving the communication identifier of the communication delivery schema generated (120).

9. A method (100) of claim 9 wherein the generating (130) the customer schema further comprising:
∘adding a receipt data indicating the customer communication has been received upon detecting the receipt event, and
∘adding a acknowledge data indicating the customer communication has been acknowledged upon detecting the acknowledge event.

10. A method (100) of claim 1 to claim 9 further comprising a step of:
- adding (140) one or more additional composition identifiers to the customer schema generated (130), the one or more additional composition identifiers corresponding to an additional customer communication, and/or
- adding (150) one or more additional communication identifiers to the customer schema generated (130), the one or more additional communication identifiers corresponding to an additional delivery process of the customer communication and/or the additional customer communication.

11. A method (100) of claim 2 to claim 9, the method further comprising steps of:
- identifying (160) a set of customer schemas having a predetermined customer identifier, the predetermined customer identifier corresponding to a customer,
- retrieving (170) a set of communication identifiers based on the set of customer schemas,
- retrieving (180) a set of communication delivery schemas based on the set of predetermined communication identifiers, and
- analysing (190) a behaviour of the customer by using K-Means unsupervised learning method for clustering data points, each data point corresponding to a communication delivery schema, the clustering being based on the state attribute of the communication delivery schemas.

12. A customer communication system (200) for managing to customer communications, the system comprising:
- a customer communication management module (210) configured to:
∘design customer communications,
∘package and register customer communications, and
∘produce at least one event to a communication composition module (240) via the application programming interface (260) configured to enable communication between the customer communication management module (210) and the communication composition module (240),
- a customer relationship management module (220) configured to:
∘store information about customers, and
∘produce at least one event to the communication composition module (240) via the application programming interface (260) configured to enable communication between the customer relationship management module (220) and the communication composition module (240),
- a delivery module (230) configured to:
∘deliver customer communications, and
∘produce at least one event to the communication composition module (240) via the application programming interface (260) configured to enable communication between the delivery module (230) and the communication composition module (240), and
- a communication composition module (240) configured to:
∘receive events, via the application programming interface (260), produced by the customer communication management module (210), the customer relationship management module (220) and communication composition module (240),
∘generate (110), based on at least one the received events, a composition processing schema comprising attributes of a design process of a customer communication, the attributes comprising a composition identifier and a composition type, the composition type being chosen amongst a batch type, a real type and an interactive type,
∘generate (120), based on at least one the received events, a communication delivery schema comprising attributes of a delivery process of the customer communication, the attributes comprising a communication identifier and a delivery channel, and
∘generate (130), based on at least one the received events, a customer schema comprising the composition identifier, the communication identifier, and the attributes of a customer for whom the customer communication is intended, the attributes comprising a customer identifier.

13. A system (200) of claim 11 further comprising a policy administration system (250) configured to:
- manage and administer the lifecycle of insurance policies,
- produce at least one event to a communication composition module (240) via the application programming interface (260) configured to enable communication between the policy administration system (250) and the communication composition module (240), and
wherein the communication composition module (240) is further configured to receive events, via the application programming interface (260), produced by policy administration system (250).

14. A computer program comprising instructions for performing the method according to any one of the claims 1 to 11.

15. A computer readable storage medium having recorded thereon the computer program of claim 13.
